Europäisches Patentamt

European Patent Office

Office européen des brevets

(11) Veröffentlichungsnummer: **0 153 698**
**A2**

(12) # EUROPÄISCHE PATENTANMELDUNG

(21) Anmeldenummer: 85101870.5

(22) Anmeldetag: 21.02.85

(51) Int. Cl.⁴: **A 01 B 15/00**

(30) Priorität: 29.02.84 US 584663

(43) Veröffentlichungstag der Anmeldung:
04.09.85 Patentblatt 85/36

(84) Benannte Vertragsstaaten:
DE FR GB SE

(71) Anmelder: DEERE & COMPANY
1 John Deere Road
Moline Illinois 61265(US)

(72) Erfinder: Loren, Glenn Arnold
17163 Road J. Route 4
Ottawa Ohio 45875(US)

(72) Erfinder: Lon, Robert Geiger
1841 - 37th Street
Moline Illinois 61265(US)

(74) Vertreter: Sartorius, Peter
DEERE & COMPANY European Office, Patent
Department Postfach 503 Steubenstrasse 36-42
D-6800 Mannheim 1(DE)

(54) Bodenbearbeitungsgerät.

(57) Ein Pflug weist an seinem Hauptrahmen zahlreiche mit Abstand zueinander angeordnete Rahmenteile bzw. Halterungen (34) auf, die jeweils an ihrem vorderen Ende mit einem Bogenstück (36) ausgerüstet sind, das zur lösbaren Aufnahme von Tragarmen (38) dient, deren entsprechendes Ende an das Bogenstück angepaßt ist. Der Tragarm (38) ist mittels Schraubenbolzen (44, 46) an das Bogenstück (36) angeschlossen. Um ein Verstellen des Tragarmes (38) an dem Bogenstück (36) zu verhindern, sind die gegeneinander anliegenden Flächen von Tragarm (38) und Bogenstück (36) mit Zähnen (52) versehen.

FIG. 3

## Bodenbearbeitungsgerät

Die Erfindung bezieht sich auf ein Bodenbearbeitungsgerät, insbesondere Pflug, mit an einem Hauptrahmen angeordneten Rahmenteilen zur Aufnahme von Pflugkörpern und Vorschälern bzw. Scheibensechen, die mittels Befestigungselementen an den Rahmenteilen lösbar angeschlossen sind.

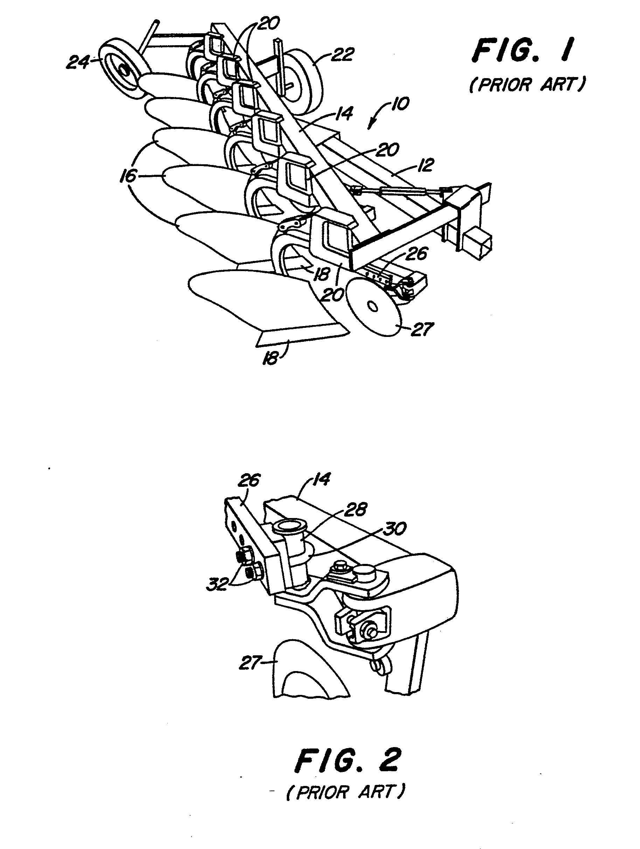

Es ist bereits ein Pflug bekannt (siehe Fig. 1 und 2 der gleichlautenden Anmeldung), der einen Hauptrahmen aufweist, an dem zahlreiche Rahmenteile mit Abstand zueinander angeordnet sind. Die Rahmenteile dienen zur Aufnahme von Pflugscharen und von Scheibensechen. Die Scheibensechen weisen jeweils eine Halterung mit vertikal verlaufenden Bolzen auf, die in U-Bügel-Schrauben aufgenommen sind. Die einzelnen U-Bügel-Schrauben lagern in in den Rahmenteilen vorgesehenen Bohrungen und sind mittels Muttern gesichert. Bei starken Erschütterungen oder bei Auftreffen der Scheibensechen auf Hindernisse besteht die Gefahr, daß die einzelnen Bolzen in den U-Bügel-Schrauben verschoben werden, so daß ein genauer Sitz der Scheibensechen nicht über den gesamten Arbeitseinsatz hin gewährleistet ist.

Demgegenüber liegt der Erfindung die Aufgabe zugrunde, die einzelnen Bodenbearbeitungswerkzeuge bzw. Vorschäler oder Scheibensechen derart an den Rahmenteilen anzuschließen, daß auch bei extremen Belastungen keine selbständige Verstellung der Bodenbearbeitungswerkzeuge erfolgt. Diese Aufgabe ist dadurch gelöst worden, daß der an den Hauptrahmen angeschlossene Rahmenteil an seinem vorderen Ende ein Bogenstück aufweist, an das ein Tragarm zur Aufnahme des Vorschälers angepaßt ist, wobei die sich gegenüberliegenden Flächen des Tragarmes und des Bogenstückes ineinandergreifende Zähne aufweisen. Durch die vorteilhafte Ausbildung und Anordnung des vorderen Endes der Rahmenteile sowie der daran angeschlossenen Tragarme wird ein einwandfreier Sitz der Bodenbearbeitungswerkzeuge auch bei extremen Arbeitsbedingungen
gewährleistet. Der einwandfreie Sitz wird insbesondere dadurch gewährleistet, daß die Tragarme dem Bogenstück des
Rahmenteils angepaßt sind, wobei die gegeneinander anliegenden Flächen der Tragarme und der Bogenstücke mit Zähnen
versehen sind, die ein gegenseitiges Verrutschen der einzelnen Teile verhindern. In weiterer Ausgestaltung der Erfindung
ist es vorteilhaft, daß die gegeneinander anliegenden Flächen
von Tragarm und Bogenstück sowie die zugehörigen Zähne in
vertikaler Ebene verlaufen und mittels Schraubenbolzen gegeneinander gepreßt werden und daß die Schraubenbolzen in in dem
Bogenstück und dem Tragarm vorgesehenen Längsschlitzen aufgenommen sind und der Vorschäler horizontal verschiebbar und
vertikal unverschiebbar gelagert ist. Durch die Verwendung
von Längsschlitzen zur Aufnahme von Schraubenbolzen ist eine
einwandfreie und exakte Verstellung der Bodenbearbeitungswerkzeuge in horizontaler Richtung möglich. Die einzelnen
Zähne, die sich über einen großen Teil des Bogenstückes und
des Tragarmes erstrecken, gewährleisten einen großen Stellbereich der Bodenbearbeitungswerkzeuge in horizontaler Richtung
und einen festen Sitz des Vorschälers, wenn die Schraubenbolzen angezogen sind.

Im folgenden wird die Erfindung anhand von lediglich einen
Ausführungsweg darstellenden Zeichnungen näher erläutert.
Es zeigt:

<blockquote>
Fig. 1    eine perspektivische Darstellung
eines bekannten Pfluges,

Fig. 2    eine Teilansicht der Befestigungselemente für den Pflug gemäß Fig. 1,

Fig. 3    eine Seitenansicht der erfindungsgemäßen Vorrichtung für einen Pflug,
</blockquote>

Fig. 4      eine Seitenansicht des Pfluges gemäß
            Fig. 3.


In der Zeichnung ist mit 10 ein Pflug mit Scharkörpern bezeichnet, der eine Zugstange 12, einen Hauptrahmen 14 und zahlreiche Pflugkörper 16 aufweist. Ein jeder Pflugkörper besteht aus einem Streichblech mit dem zugehörigen Schar 18. Das Streichblech mit dem zugehörigen Schar 18 ist an den Hauptrahmen 14 mittels Befestigungselementen 20 angeschlossen. Am Ende des Hauptrahmens befinden sich Stützräder 22 und 24. Der Pflugkörper 16 mit dem zugehörigen Schar 18 ist neben den Befestigungselementen 20 über einen weiteren sich in Arbeitsrichtung erstreckenden Rahmenteil 26 an den Hauptrahmen 14 angeschlossen. In dem Rahmenteil 26 befinden sich zahlreiche hintereinander angeordnete, sich horizontal erstreckende Bohrungen zur Aufnahme der Gewindeteile einer U-förmigen Klammer 30 zur Befestigung eines Scheibenseches 27, wie es in Fig. 2 veranschaulicht ist.


Der gemäß Fig. 1 und 2 bekannte Pflug zeigt die Befestigung der Scheibensechen 27 an dem sich in Arbeitsrichtung erstreckenden Rahmenteil 26. In Fig. 2 ist die Montage besonders veranschaulicht. Zur Befestigungseinrichtung des Scheibenseches 27 gehört ein vertikal verlaufender zylindrischer Schaft 28, der von der Klammer 30 umgriffen ist, die sich mit ihren Gewindeteilen durch die in dem Rahmenteil 26 vorgesehenen Bohrungen erstreckt. Auf den beiden Schenkeln der Gewindeteile der Klammer 30 sind Schraubenmuttern 32 aufgeschraubt. Jedoch auch dann, wenn die Muttern 32 auf die U-förmige Klammer 30 fest aufgeschraubt sind, können Vibrationen bzw. Stöße, die bei Auftreten der Scheibensechen 27 auf die Klammern übertragen werden, dazu führen, daß der Schaft 28 innerhalb der Klammer 30 verschoben wird.

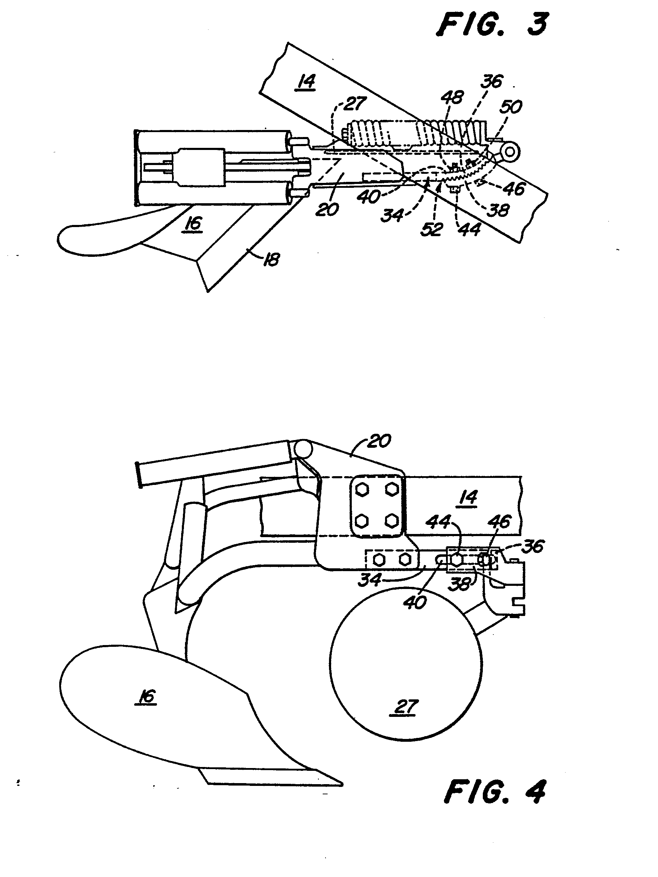

Aufgrund der erfindungsgemäßen Vorrichtung ist das Scheibensech 27 gemäß Fig. 3 und 4 wesentlich besser befestigt. In den Figuren 1 und 2 und in den Figuren 3 und 4 sind gleiche Teile mit gleichen Bezugszeichen versehen. Gemäß Fig. 3 und 4 ist der Rahmenteil 26 (siehe Fig. 1 und 2) durch eine Halterung bzw. einen Rahmenteil 34 ersetzt, der mittels Befestigungselementen 20 an den Hauptrahmen 14 angeschlossen ist. Darüber hinaus ist der Rahmenteil 34, wie aus Fig. 3 hervorgeht, im Bereich des vorderen Endes mit einem Bogenstück 36 versehen.

Das Scheibensech 27 ist gemäß Fig. 3 mit einem Tragarm 38 ausgerüstet, der, wie aus der Draufsicht gemäß Fig. 3 hervorgeht, bogenförmig ausgebildet ist und an das Bogenstück 36 des Rahmenteils 34 angepaßt ist. Das Bogenstück 36 und der Tragarm 38 sind mit je einem Schlitz 40 und 42 ausgerüstet, durch die sich zwei Schraubenbolzen 44 und 46 erstrecken, die mittels Muttern 48 und 50 gesichert sind.

Aufgrund der bogenförmigen Ausbildung und der Anpassung des Tragarmes 38 an den Rahmenteil 34 sowie der Anklammerung des Tragarmes 38 an den Rahmenteil 34 mittels der Schraubenbolzen 44 und 46 wird eine vibrationsfreie Verbindung dieser Teile in horizontaler und vertikaler Richtung geschaffen. Eine Verbesserung der Verbindung des Tragarmes 38 mit dem Rahmenteil 34 wird dadurch erreicht, daß die sich gegenüberliegenden Flächen des Bogenstückes 36 und des Tragarmes 38 mit vertikal verlaufenden Zähnen 52 versehen sind, die dazu beitragen, daß bei auftretenden Hindernissen, die über das Scheibensech 27 auf die Halterung einwirken, eine feste Verbindung aufrechterhalten wird.

Die gegenwärtige Erfindung ist insbesondere zur Befestigung von Scheibensechen an den Rahmen eines Pfluges geeignet. Jedoch ist es möglich, eine derartige Verbindung auch bei anderen Bodenbearbeitungsgeräten einzusetzen. Beispielsweise ist es möglich, eine derartige Verbindung bei einfachen verstellbar ausgebildeten Pflugkörpern von Pflügen einzusetzen, die starken Stößen bzw. Schwingungen ausgesetzt sind.

<u>Patentansprüche</u>

1. Bodenbearbeitungsgerät, insbesondere Pflug, mit an einem Hauptrahmen (14) angeordneten Rahmenteilen (26) zur Aufnahme von Pflugkörpern (16) und Vorschälern bzw. Scheibensechen (27), die mittels Befestigungselementen an den Rahmenteilen (26, 34) lösbar angeschlossen sind, dadurch gekennzeichnet, daß der an den Hauptrahmen (14) angeschlossene Rahmenteil (26, 34) an seinem vorderen Ende ein Bogenstück (36) aufweist, an das ein Tragarm (38) zur Aufnahme des Vorschälers angepaßt ist, wobei die sich gegenüberliegenden Flächen des Tragarmes (38) und des Bogenstückes ineinandergreifende Zähne (52) aufweisen.

2. Bodenbearbeitungsgerät nach Anspruch 1, dadurch gekennzeichnet, daß die gegeneinander anliegenden Flächen von Tragarm (38) und Bogenstück (36) sowie die zugehörigen Zähne (52) in vertikaler Ebene verlaufen und mittels Schraubenbolzen (44, 46) gegeneinander gepreßt werden.

3. Bodenbearbeitungsgerät nach Anspruch 1 oder 2, dadurch gekennzeichnet, daß die Schraubenbolzen in in dem Bogenstück (36) und dem Tragarm (38) vorgesehenen Längsschlitzen (40, 42) aufgenommen sind und der Vorschäler horizontal verschiebbar und vertikal unverschiebbar gelagert ist.

0153698

1/2

FIG. 1

(PRIOR ART)

FIG. 2

(PRIOR ART)

*FIG. 3*

*FIG. 4*